# EUROPÄISCHE PATENTANMELDUNG

(11) **EP 4 813 722 A1**
(43) Veröffentlichungstag der Anmeldung: **30.09.2026**
(21) Anmeldenummer: 26158631.7
(22) Anmeldetag: 13.02.2026
(51) Int. Cl.: B60L 3/00, B60L 53/14, B60L 53/30, B60L 53/31, B60L 53/66

(54) **LADEVORRICHTUNG UND ELEKTROFAHRZEUG**

(30) Priorität: 28.03.2025 DE 102025112112
(71) Anmelder: Mercedes-Benz Group AG, 70372 Stuttgart (DE)
(72) Erfinder: Marquardt, Rene, 71083 Herrenberg (DE)
(74) Vertreter: Buchta, Hao

(57) **Zusammenfassung**

Die Erfindung betrifft eine Ladevorrichtung (1) zum Laden einer Traktionsbatterie eines Elektrofahrzeugs (2), umfassend eine Ladeschnittstelle (3) mit einem Pilotkontakt (4) und einen Oszillator (5), wobei mittels des Oszillators (5) ein als PMW-Signal (PMW) bezeichnetes pulsweitenmoduliertes Spannungssignal auf den Pilotkontakt (4) anlegbar ist, um mit dem Elektrofahrzeug (2) kodierte Informationen über die Ladeschnittstelle (3) auszutauschen, wobei mittels des PMW-Signals (PMW) eine Ladebereitschaft signalisierbar ist, wenn sich der Tastgrad (TG) des PMW-Signals (PMW) einem ersten festgelegten Tastgradbereich (TGB1) zuordnen lässt und ein Ladeverbot signalisierbar ist, wenn sich der Tastgrad (TG) des PMW-Signals (PMW) einem zweiten festgelegten Tastgradbereich (TGB2) zuordnen lässt. Die erfindungsgemäße Ladevorrichtung ist dadurch gekennzeichnet, dass der Oszillator (5) dazu eingerichtet ist, zum Übertragen einer Zusatzinformation über den Pilotkontakt (4):
- zur Ausbildung von Nachrichtimpulsen (6) den Tastgrad (TG) zwischen 100% und einem nachrichttypspezifischen Wert im zweiten Tastgradbereich (TGB2) zu wechseln, wobei eine nachrichttypspezifische Anzahl an Nachrichtimpulsen (6) unter Verwendung einer nachrichttypspezifischen Impulsdauer (t1) und einer nachrichttypspezifischen Pausendauer (t2) gewählt wird; und
- den Tastgrad (TG) zum Signalisieren des Nachrichtendes zurück auf 100% zu schalten und dort zu belassen.

## Beschreibung

Die Erfindung betrifft eine Ladevorrichtung zum Laden einer Traktionsbatterie eines Elektrofahrzeugs nach der im Oberbegriff von Anspruch 1 näher definierten Art sowie ein Elektrofahrzeug nach der im Oberbegriff von Anspruch 10 näher definierten Art.

Zum Wiederaufladen der Traktionsbatterie eines batterieelektrisch antreibbaren Fahrzeugs lässt sich das jeweilige Fahrzeug über eine Ladeschnittstelle an einer Ladestation anschließen. Dabei können öffentliche Ladestationen sowie private Ladestationen genutzt werden. Die technische Ausführung der Ladestation, der Ladeschnittstelle sowie der Kommunikation zwischen Ladestation und Fahrzeug unterliegt dabei verschiedenen Standards bzw. Normen.

Nutzer laden häufig im privaten Umfeld, so dass der privaten Ladeinfrastruktur ein besonderer Stellenwert gegenüber öffentlicher Ladeinfrastruktur zukommt. Die im häuslichen Umfeld verwendeten Ladestationen werden häufig an der Wand montiert und werden daher als Wandladestationen bzw. Wallbox bezeichnet. Es ist wünschenswert eine Wallbox anzubieten, die dem Kunden einen Mehrwert bietet.

Beim Durchführen von Ladevorgängen kann es zu Problemen kommen. Beispielsweise kann ein Ladevorgang nicht gestartet werden oder wird im laufenden Betrieb unterbrochen, wenn ein interner Fehler der Wallbox auftritt oder ein übergeordnetes Energiemanagementsystem zur Bereitstellung von elektrischer Energie eine Versorgungslücke aufweist. Dies ist beispielsweise unter Nutzung von Photovoltaikmodulen der Fall, wenn temporär Wolken vor der Sonne vorbeiziehen. Die Möglichkeiten zur Kommunikation von Fehlern sind beschränkt, so dass der Kunde oftmals nicht transparent genug nachvollziehen kann, warum das Fahrzeug nicht lädt.

Bei einem internen Hardwareproblem der Wallbox oder einer zu geringen Netzspannung leuchtet meist ein farbiges Fehlersymbol an der Wallbox auf, wie das Piktogramm eines Ausrufezeichens. Zur Differenzierung unterschiedlicher Fehlerursachen können unterschiedliche Blinkcodes implementiert sein. Das Interpretieren solcher Blinkcodes ist für den Nutzer jedoch unkomfortabel, da er die Blinkcodes meist nicht auswendig kennt und entsprechend in einem Handbuch nachschlagen muss. Dieses Handbuch ist meist nicht schnell genug auffindbar.

Es ist bekannt, dass vernetzte Fahrzeuge eine Ladeunterbrechung dem Fahrzeughalter melden. Beispielsweise kann das Fahrzeug per Mobilfunk bzw. über das Internet eine Pushnachricht an ein mit dem Fahrzeug gekoppeltes mobiles Endgerät, wie ein Smartphone verschicken. Da das Fahrzeug dabei jedoch keinerlei Informationen über die Fehlerursache hat, umfasst eine solche Pushnachricht lediglich die Information, dass der Ladevorgang unterbrochen wurde. Es kann jedoch nicht zwischen einer Ladepause, wie sie durch das Vorbeiziehen von Wolken unter Nutzung einer Photovoltaikanlage erfolgen kann, und einem Ladefehler unterschieden werden. Insbesondere wenn solche Ladepausen mit hoher Frequenz vorkommen, wie bei einer aufgelockerten Bewölkung, bei der vergleichsweise häufig Wolken vor der Sonne vorbeiziehen, kann hierdurch der Nutzer durch die häufige Ausgabe der Pushnachrichten gestört werden.

Es ist bekannt, Wallboxen mit einem zusätzlichen Kommunikationskanal auszustatten, um differenziertere Informationen bezüglich des Ladevorgangs auszugeben. Beispielsweise sei hier auf die sogenannte Powerline Communication hingewiesen (PLC). Bei einer solchen PLC-fähigen Wallbox ist ein zusätzlicher PLC-Chip verbaut, der eine Kommunikation unter Umsetzung des aus der ISO15118 bekannten Protokolls ermöglicht. Das Vorsehen dedizierter Hardwarekomponenten, auch im Fahrzeug, geht jedoch mit gesteigerten Kosten einher. Zudem steigt der Implementierungsaufwand für den Datenaustausch.

Aus der EP 4 352 850 B1 ist ein Verfahren und eine Vorrichtung zur Kontrolle eines Ladevorgangs zum Aufladen der Traktionsbatterie eines Elektrofahrzeugs bekannt. Die Druckschrift beschreibt eine Wandladestation, die zur Durchführung von Ladevorgängen gemäß IEC 61851 fähig ist.

Zur Kommunikation zwischen Fahrzeug und Wallbox wird dabei an den sogenannten Pilotkontakt der Ladeschnittstelle der Wallbox eine Spannung von 12 V angelegt. Wird die Traktionsbatterie eines Fahrzeugs über ein Ladekabel an die Wallbox angeschlossen, so wird mittels eines Oszillators auf das Spannungssignal eine Rechteckschwingung mit einer Frequenz von 1 kHz aufgeprägt. Auf der Seite des Elektrofahrzeugs wird der Stromkreis vom Pilotkontakt über einen Widerstand und eine Diode auf den Schutzleiter zurückgeführt. Solange kein Elektrofahrzeug eingesteckt ist, liegt auf dem Pilotkontakt dauerhaft +12 V an, wodurch ein Standby-Modus signalisiert wird. Die Wandladestation signalisiert dem Fahrzeug über eine Pulsweitenmodulation der 1 kHz Rechteckschwingung die maximal erlaubte Stromaufnahme je Phase. Die erlaubte Stromaufnahme berechnet sich aus dem Tastgrad des pulsweitenmodulierten Signals. Der maximal nutzbare Strom kann dabei Werte in einem Bereich zwischen 6 A und 80 A annehmen. In einem Tastgradbereich von 0 bis 3%, 7 bis 8% sowie 97 bis 100% ist kein Laden erlaubt. Im Bereich von 3 bis 7% ist das Laden mit zusätzlicher digitaler Kommunikation nach ISO 15118 oder IEC 61851-24 erlaubt. Im Tastgradbereich von 8 bis 97% ist das Laden mit besagter Stromstärke von 6 bis 80 A freigegeben.

Der Ladecontroller der Wandladestation in der EP 4 352 850 B1 ist dabei dazu eingerichtet, einem Fahrzeugcontroller eines an die Wandladestation angeschlossenen Fahrzeugs durch Ändern der Amplitude des pulsweitenmodulierten Spannungssignals am Pilotkontakt mitzuteilen, welche Wechselstromladephasen zum Laden der Fahrzeugbatterie zur Verfügung stehen. Dies erlaubt ein weiches Schalten an den betreffenden Wechselstromladephasen. Zwischen Wandladestation und Fahrzeug ist eine bidirektionale Kommunikation möglich, so dass vom Fahrzeug gestellte Anforderungen an den Lademodus berücksichtigt werden können.

Der vorliegenden Erfindung liegt die Aufgabe zugrunde eine verbesserte Ladevorrichtung zum Laden der Traktionsbatterie eines Elektrofahrzeugs anzugeben, welche trotz einfachem Hardwareaufbau dazu in der Lage ist, Zusatzinformationen an ein an die Ladevorrichtung angeschlossenes Elektrofahrzeug zu übermitteln.

Erfindungsgemäß wird diese Aufgabe durch eine Ladevorrichtung mit den Merkmalen des Anspruchs 1 sowie ein Elektrofahrzeug mit den Merkmalen des Anspruchs 10 gelöst. Vorteilhafte Ausgestaltungen und Weiterbildungen ergeben sich aus den hiervon abhängigen Ansprüchen.

Eine gattungsgemäße Ladevorrichtung zum Laden einer Traktionsbatterie eines Elektrofahrzeugs, umfassend eine Ladeschnittstelle mit einem Pilotkontakt und einem Oszillator, wobei mittels des Oszillators ein als PMW-Signal bezeichnetes pulsweitenmoduliertes Spannungssignal auf den Pilotkontakt anlegbar ist, um mit dem Elektrofahrzeug kodierte Informationen über die Ladeschnittstelle auszutauschen, wobei mittels des PMW-Signals eine Ladebereitschaft signalisierbar ist, wenn sich der Tastgrad des PMW-Signals einem ersten festgelegten Tastgradbereich zuordnen lässt und ein Ladeverbot signalisierbar ist, wenn sich der Tastgrad des PMW-Signals einem zweiten festgelegten Tastgradbereich zuordnen lässt, wird erfindungsgemäß dadurch weitergebildet, dass der Oszillator dazu eingerichtet ist, zum Übertragen einer Zusatzinformation über den Pilotkontakt:
- zur Ausbildung von Nachrichtimpulsen den Tastgrad zwischen 100% und einem nachrichttypspezifischen Wert im zweiten Tastgradbereich zu wechseln, wobei eine nachrichttypspezifische Anzahl an Nachrichtimpulsen unter Verwendung einer nachrichttypspezifischen Impulsdauer und einer nachrichttypspezifischen Pausendauer gewählt wird; und
- den Tastgrad zum Signalisieren des Nachrichtendes zurück auf 100% zu schalten und dort zu belassen.

Die erfindungsgemäße Ladevorrichtung, insbesondere in Form einer Ladestation, ist somit dazu in der Lage, über den Pilotkontakt Zusatzinformationen an das über die Ladeschnittstelle angeschlossene bzw. anschließbare Fahrzeug zu übermitteln. Hierzu wird der Tastgrad des PMW-Signals nach festgelegten Mustern innerhalb des zweiten Tastgradbereichs verändert, wobei das jeweilige Muster die besagte Zusatzinformation kodiert. Der erste festgelegte Tastgradbereich wird dabei nicht genutzt, da dieser zur Signalisierung der Ladebereitschaft reserviert ist.

Die erfindungsgemäße Ladevorrichtung kann insbesondere zur Durchführung von Ladevorgängen gemäß IEC 61851 ausgeführt sein. Das PMW-Signal kann dann insbesondere mit einer Frequenz von 1 kHz moduliert sein.

Eine vorteilhafte Weiterbildung der erfindungsgemäßen Ladevorrichtung sieht dabei vor, dass der Oszillator dazu eingerichtet ist, vor dem Senden von Nachrichtimpulsen einen Tastgrad von 100% für eine erste festgelegte Zeitdauer auf einen festgelegten Wert im zweiten Tastgradbereich zu schalten, insbesondere auf den nachrichttypspezifischen Wert, um einen Nachrichtbeginn zu signalisieren. Zum Kodieren der Zusatzinformation werden mittels des Oszillators Nachrichtimpulse erzeugt. In Abhängigkeit der Ausgestaltung der Nachrichtimpulse lassen sich unterschiedliche Zusatzinformationen kodieren. Das an die Ladevorrichtung anschließbare Elektrofahrzeug verfügt über eine geeignete Messeinrichtung zur Auswertung des PMW-Signals. Dies erlaubt es dem Elektrofahrzeug bzw. einem Steuergerät im Elektrofahrzeug die auf dem Pilotkontakt anliegenden Nachrichtimpulse zu erkennen und zu interpretieren. Somit kann das Elektrofahrzeug auf die Zusatzinformationen schließen. Durch das Schalten des Tastgrads von 100% auf einen festgelegten Wert im zweiten Tastgradbereich für die erste festgelegte Zeitdauer, lässt sich dabei dem Elektrofahrzeug vermitteln, das nun Zusatzinformationen übermittelt werden. Somit lässt sich nicht nur das Ende, sondern auch der Beginn einer jeweiligen Nachrichtenübertragung markieren, was für eine besonders zuverlässige Informationsübermittlung und Interpretation sorgt.

Entsprechend einer weiteren vorteilhaften Ausgestaltung der erfindungsgemäßen Ladevorrichtung ist es ferner vorgesehen, dass der Oszillator dazu eingerichtet ist, die Zusatzinformationen durch Wahl einer abweichenden Höhe des Werts des Tastgrads im zweiten Tastgradbereich, eine abweichende Anzahl an Nachrichtimpulsen, eine abweichende Impulsdauer und/oder eine abweichende Pausendauer zu kodieren. Als Zusatzinformationen lassen sich so verschiedene vorgefertigte Nachrichten übermitteln. Eine jede Nachricht bzw. ein unterschiedlicher Nachrichtentyp lässt sich so über die beschriebenen Größen definieren und klar angeben.

Eine weitere vorteilhafte Ausgestaltung der erfindungsgemäßen Ladevorrichtung sieht ferner vor, dass als Zusatzinformation eine Fehlermeldung übertragbar ist. Zumindest ein Nachrichtentyp ist somit zur Übertragung von Fehlermeldung reserviert. Gemäß einer vorteilhaften Ausführungsform der erfindungsgemäßen Ladevorrichtung beschreibt dabei die Fehlermeldung einen internen Fehler der Ladevorrichtung oder einen externen Fehler einer übergeordneten Energieinfrastruktur. Somit lassen sich Fehlerursachen zum Unterbrechen bzw. Nicht-Zustandekommen eines Ladevorgangs von der Ladevorrichtung an das Elektrofahrzeug kommunizieren. Dem jeweiligen Nutzer lässt sich so transparent anzeigen, was die Ursache für den Fehler ist, so dass zielgerichtet geeignete Gegenmaßnahmen eingeleitet werden können.

Ein interner Fehler kann die Hardware der Ladevorrichtung selbst betreffen. Eine weitere interne Fehlerursache kann eine zu geringe Netzspannung sein. Ein externer Fehler betrifft eine übergeordnete Energieinfrastruktur, wie eine Photovoltaikanlage.

Beispielsweise ziehen Wolken vorbei, so dass temporär eine zu geringe elektrische Leistung bereitgestellt wird. Der Ladevorgang wird somit unterbrochen. Eine solche Ladepause lässt sich dann transparent anzeigen.

Eine weitere vorteilhafte Ausgestaltung der erfindungsgemäßen Ladevorrichtung sieht ferner vor, dass der erste Tastgradbereich einem abgeschlossenen Intervall von 8% bis 97% entspricht. Insbesondere lässt sich so der gemäß der IEC 61851 für die Signalisierung der Ladebereitschaft reservierte Tastgradbereich des PMW-Signals von 8 bis 97% von der Nutzung zur Übermittlung von Informationen aussparen. In diesem Tastgradbereich gibt der Tastgrad die maximal nutzbare Ladestromstärke an. Im Bereich von 8 bis 10% sind dies 6 A. Im Bereich von 10 bis 85% entspricht die Ladestromstärke dem 0,6-fachem des Tastgrads. Im Bereich von 85% bis 96% entspricht die Ladestromstärke einem Wert berechnet nach der Formel: (Tastgrad - 64) x 2,5 A. Im Bereich von 96% bis 97% beträgt die Ladestromstärke 80 A.

Entsprechend einer weiteren vorteilhaften Ausgestaltung der erfindungsgemäßen Ladevorrichtung ist es ferner vorgesehen, dass der zweite Tastgradbereich ein erstes rechtsoffenes Intervall von 0 bis 8% und ein zweites offenes Intervall von 97% bis 100% umfasst. Somit lassen sich insbesondere die nach IEC 61851 definierten Tastgradbereiche, in denen kein Laden bzw. nur Laden unter zusätzlicher digitaler Kommunikation erlaubt ist, zur Übermittlung besagter Zusatzinformationen nutzen.

Eine weitere vorteilhafte Ausgestaltung der erfindungsgemäßen Ladevorrichtung sieht ferner vor, dass diese als Wallbox ausgeführt ist. Die Ladevorrichtung ist somit insbesondere für die private Nutzung zuhause vorgesehen. Die Ladevorrichtung ist bevorzugt zur Montage an einer Wand ausgeführt.

Entsprechend einer weiteren vorteilhaften Ausgestaltung der erfindungsgemäßen Ladevorrichtung ist es ferner vorgesehen, dass diese Mittel zum Freigeben und Sperren der Übertragung der Zusatzinformationen umfasst. Die Übertragung der Zusatzinformationen lässt sich somit gezielt ein- und ausschalten. Hierdurch lassen sich Komplikationen beim Laden von Elektrofahrzeugen vermeiden, die nicht zum Empfangen besagter Zusatzinformationen fähig sind. Das Ein- und Ausschalten der Übertragung der Zusatzinformationen kann softwareseitig erfolgen, beispielsweise durch Interaktion mit der Ladevorrichtung über eine geeignete Mensch-Maschine-Schnittstelle. Hierzu kann ein an der Ladevorrichtung vorgesehenes Bedienfeld verwendet werden oder auch ein mit der Ladevorrichtung gekoppeltes mobiles Endgerät. Beispielsweise kann ein Laptop per Ethernetkabel oder ein Smartphone per Wi-Fi, Bluetooth, NFC oder dergleichen mit der Ladevorrichtung koppelbar sein. An der Ladevorrichtung kann auch ein dedizierter Schalter vorgesehen sein, um zwischen dem Freigeben und Sperren der Übertragung der Zusatzinformationen zu wechseln. Auch kann auf der Platine eines Steuergeräts der Ladevorrichtung ein sogenannter Jumper vorgesehen sein, um zwischen den beiden Übertragungsmodi zu wechseln, welches aufgrund der einfachen Ausführung die bevorzugte Umsetzungsvariante darstellt.

Ein gattungsgemäßes Elektrofahrzeug, umfassend eine Ladeschnittstelle zur Verbindung mit einer im vorigen beschriebenen Ladevorrichtung und mit einer Messeinrichtung zum Messen des am Pilotkontakt anlegbaren PMW-Signals, wird erfindungsgemäß dadurch weitergebildet, dass in der Messeinrichtung eine Dekodierung der Zusatzinformation gespeichert ist. Diese Dekodierung entspricht beispielsweise einer Liste unterschiedlicher Nachrichten bzw. Nachrichttypen. Je nachdem wie die Zusatzinformation kodiert ist, welches Muster also das PMW-Signal aufweist, entspricht die übermittelte Zusatzinformation einer dieser Nachrichten. Die Messeinrichtung kann beispielsweise eine entsprechende Dekodierung in einem computerlesbaren Speichermedium bevorraten.

Besonders bevorzugt werden die empfangenen Zusatzinformationen im Elektrofahrzeug zwischengespeichert. Sucht der Nutzer des Elektrofahrzeugs eine Werkstatt auf, beispielsweise zur Durchführung einer turnusmäßigen Wartung, kann der Speicher ausgelesen werden, so dass Fachpersonal die von der Ladevorrichtung übermittelten Nachrichten auswerten kann. Somit ist eine Wartung der zuhause aufgestellten Ladevorrichtung an einem externen Ort möglich. Der Speicher zum Zwischenspeichern der Zusatzinformationen ist entsprechend groß ausgeführt. Der Speicher kann auch als Ringspeicher ausgeführt sein.

Entsprechend einer vorteilhaften Ausführungsform des erfindungsgemäßen Elektrofahrzeugs ist es ferner vorgesehen, dass dieses Mittel zur Ausgabe einer dekodierten Zusatzinformation an einen Nutzer umfasst, insbesondere in Form von Lautsprechern und/oder einer Anzeigevorrichtung. Die von der Ladevorrichtung übermittelten Zusatzinformationen lassen sich so an den Nutzer des Elektrofahrzeugs auf klar verständliche Art und Weise ausgeben. Beispielsweise können Warntöne über die Lautsprecher ausgegeben werden oder auch Textnachrichten per computergenerierter Sprache ausgegeben werden. Auf einer Anzeigevorrichtung lassen sich jeweilige Zusatzinformationen als Text und/oder grafisch darstellen. So lässt sich dem Nutzer auf klar verständliche Art und Weise veranschaulichen, dass eine Unterbrechung des Ladevorgangs beispielsweise durch vorbeiziehende Wolken bedingt ist, so dass die verwendete Photovoltaikanlage eine zu geringe Ladeleistung bereitstellt.

Eine weitere vorteilhafte Ausgestaltung des erfindungsgemäßen Elektrofahrzeugs sieht ferner vor, dass dieses Mittel zum Übertragen einer dekodierten Zusatzinformation an ein mittelbar oder unmittelbar mit dem Elektrofahrzeug gekoppeltes mobiles Endgerät umfasst. Bei dem mobilen Endgerät kann es sich beispielsweise um das Smartphone des Nutzers handeln. Auf dem Smartphone kann eine dedizierte App ausgeführt sein, die zum Empfangen von Informationen vom Elektrofahrzeug eingerichtet ist. Das mobile Endgerät kann unmittelbar mit dem Elektrofahrzeug gekoppelt sein, beispielsweise per USB-Kabel, oder auch drahtlos per Bluetooth, Wi-Fi, NFC und dergleichen. Das mobile Endgerät kann auch mittelbar mit dem Elektrofahrzeug gekoppelt sein. Hierzu kann eine zentrale Recheneinrichtung über das Internet zwischen Elektrofahrzeug und mobiles Endgerät geschaltet sein. Das Elektrofahrzeug kann per Mobilfunk über eine Telekommunikationseinheit an das Internet angebunden sein. Dies erlaubt einen Datenaustausch zwischen Elektrofahrzeug und zentraler Recheneinrichtung. Die zentrale Recheneinrichtung kann in diesem Kontext auch als Server bzw. Cloudserver oder Backend bezeichnet werden. Befindet sich das Elektrofahrzeug bzw. die Telekommunikationseinheit in Reichweite eines WLAN-Hotspots, kann auch eine Anbindung an die zentrale Recheneinrichtung über das über das Heimnetz des Nutzers kontaktierbare Internetmodem erfolgen. Das mobile Endgerät verfügt selbst über eine Mobilfunkanbindung bzw. ist über den privaten WLAN-Router des Nutzers mit dem Internet verbunden.

Vorteilhafterweise werden die üblicherweise vom Elektrofahrzeug ausgegebenen Pushnachrichten zum Anzeigen einer Ladeunterbrechung unterbunden, wenn die Fehlerursache zum Ausgeben der Pushnachricht durch die übergeordnete Energieinfrastruktur bedingt ist, oder es wird zumindest darauf hingewiesen, dass die Ladeunterbrechung bedingt durch den Fehler der Energieinfrastruktur ist. Der Komfort des Nutzers lässt sich somit verbessern.

Bei dem Elektrofahrzeug kann es sich um Kleinstfahrzeug wie eine E-Scooter oder ein **E-**Bike handeln. Es kann sich jedoch auch um ein Straßenfahrzeug wie einen Pkw, Lkw, Transporter, Bus oder dergleichen handeln.

Die erfindungsgemäße Ladevorrichtung und das erfindungsgemäße Elektrofahrzeug bilden somit ein gemeinsames System zum Übermitteln von Zusatzinformationen bei der Durchführung von Ladevorgängen. Es kann bestehende Hardware bekannter Ladevorrichtungen genutzt werden, wobei lediglich eine softwareseitige Anpassung erfolgen muss, um den Oszillator zur entsprechenden Ausgestaltung des PMW-Signals anzupassen. Dies betrifft entsprechend das Elektrofahrzeug, damit dieses das angepasste PMW-Signal korrekt dekodieren, also interpretieren kann.

Es ist eine Hardwareinteroperabilität sichergestellt. So können selbst mit einer angepassten erfindungsgemäßen Ladevorrichtung Elektrofahrzeuge geladen werden, die nicht zum Empfangen der Zusatzinformationen eingerichtet sind. Anhand der Zusatzinformationen lässt sich dem Fahrzeug mitteilen, warum der Ladevorgang nicht stattfinden kann bzw. unterbrochen wurde. Insbesondere werden Fehlerursachen übermittelt. Push-Notifikationen an den Nutzer lassen sich so gezielt steuern. Durch das Zwischenspeichern der Zusatzinformationen im Elektrofahrzeug lässt sich die turnusmäßige Fahrzeugwartung auf die Ladevorrichtung erweitern. Alle zur Fehleranalyse benötigten Informationen lassen sich dabei im Elektrofahrzeug zwischenspeichern.

Weitere vorteilhafte Ausgestaltungen der erfindungsgemäßen Ladevorrichtung und des erfindungsgemäßen Elektrofahrzeugs ergeben sich auch aus den Ausführungsbeispielen, welche nachfolgend unter Bezugnahme auf die Figuren näher beschrieben werden.

### Dabei zeigen:

- Fig. 1: eine schematische Darstellung einer bekannten Pilotkontaktschaltung einer Ladevorrichtung;
- Fig. 2: eine schematische Darstellung verschiedener Tastgradbereiche eines am Pilotkontakt anlegbaren PMW-Signals;
- Fig. 3: ein Diagramm, zeigend den Verlauf des Tastgrads des PMW-Signals über der Zeit zur Kodierung von Zusatzinformationen; und

- Fig. 4: eine schematische Darstellung eines erfindungsgemäßen Fahrzeugs, durchführend einen Ladevorgang an einer erfindungsgemäßen Ladevorrichtung.

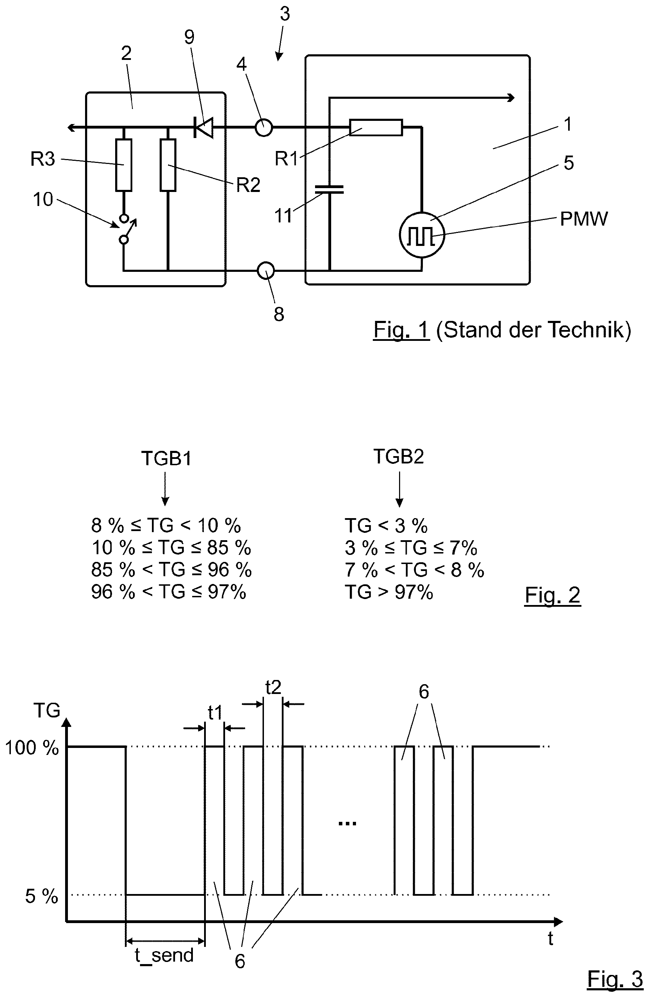

Fig. 1 zeigt stark schematisiert und vereinfacht den Aufbau einer bekannten Pilotkontaktschaltung. Dargestellt sind eine Ladevorrichtung 1, beispielsweise ausgeführt als Ladestation, sowie ein Elektrofahrzeug 2, dessen Traktionsbatterie mittels der Ladevorrichtung 1 geladen werden soll. Die Ladevorrichtung 1 und das Elektrofahrzeug 2 sind mittels einer Ladeschnittstelle 3 miteinander verbunden. Dargestellt ist lediglich der Pilotkontakt 4 der Ladeschnittstelle 3, dessen Schaltkreis durch einen Grundkontakt 8 bzw. Schutzleiter geschlossen ist.

Die Ladevorrichtung 1 umfasst einen Oszillator 5 zum Aufprägen eines als PMW-Signal PMW bezeichneten pulsweitenmodulierten Spannungssignals. Gemäß IEC 61851 weist dieses eine Frequenz von 1 kHz bei einer Spannung von 12 V auf. Die Schaltung umfasst ferner einen ersten Widerstand R1 in der Ladevorrichtung 1, insbesondere in Höhe von 1 kΩ sowie einen zweiten und einen dritten Widerstand R2 und R3 im Elektrofahrzeug 2. Zudem befindet sich im Schaltkreis im Elektrofahrzeug 2 eine Diode 9. Das Elektrofahrzeug 2 umfasst ferner eine Messeinrichtung zum Messen der Spannung im Schaltkreis, so dass der Tastgrad TG, siehe Fig. 2 und 3, erfasst werden kann. Als Reaktion auf die Höhe des Spannungssignals bzw. die Höhe des Tastgrads TG kann im Elektrofahrzeug 2 ein Schalter 10 geöffnet oder geschlossen werden, so dass sich ein unterschiedliches Spannungssignal in der Schaltung aufgrund der verschiedenen Widerstände einstellt. Diese Spannung kann dann wiederum in der Ladevorrichtung 1 gemessen werden, was eine bidirektionale Kommunikation zwischen Ladevorrichtung 1 und Elektrofahrzeug 2 erlaubt. Der entsprechende zur Messeinrichtung der Ladevorrichtung 1 führende Pfad weist dabei einen Kondensator 11 auf.

Gemäß IEC 61851 unterteilt sich der Tastgradbereich des PMW-Signals PMW in die in Fig. 2 gezeigten Tastgradbereiche TGB1 und TGB2. Im ersten Tastgradbereich TGB1 ist das Laden mittels der Ladevorrichtung 1 freigegeben, wobei in Abhängigkeit des aktuellen Tastgrads TG eine unterschiedliche maximale Stromstärke genutzt werden darf. Im zweiten Tastgradbereich TGB2 hingegen ist das Durchführen von Ladevorgängen gesperrt. Erfindungsgemäß wird dieser zweite Tastgradbereich TGB2 genutzt, um Zusatzinformationen über den Pilotkontakt 4 mittels des PMW-Signals PMW zu übertragen.

Das Funktionsprinzip zum Übertragen der Zusatzinformationen wird anhand von Fig. 3 näher erläutert. Dabei ist der Tastgrad TG in einem Diagramm über der Zeit t dargestellt. Insbesondere werden Fehlerinformationen als Zusatzinformationen übermittelt. Im Fehlerfall findet kein Laden der Traktionsbatterie statt. Die Ladevorrichtung 1 stellt den Tastgrad TG auf 100% ein. Zum Signalisieren eines Nachrichtenbeginns wird der Tastgrad TG von 100% für eine erste festgelegte Zeitdauer t_send auf einen festgelegten Wert im zweiten Tastgradbereich TGB2 geschaltet, wie beispielsweise hier dargestellt 5%. Die erste festgelegte Zeitdauer t_send beträgt hier beispielsweise 1 Sekunde.

Nun schaltet der Oszillator 5 den Tastgrad TG alternierend zwischen 100% und einem nachrichttypspezifischen Wert im zweiten Tastgradbereich TGB2 um, wie auch hier beispielsweise 5%. Hierdurch entstehen Nachrichtimpulse 6, insbesondere in Form von Rechteckimpulsen. Nachrichtimpulse 6 zeichnen sich neben der charakteristischen Höhe des Tastgrads TG durch eine Pulsdauer t1 und eine Pausendauer t2 aus. Die Anzahl der Nachrichtimpulse 6, die Pulsdauer t1 sowie die Pausendauer t2 können variiert werden, um unterschiedliche Nachrichttypen bzw. Zusatzinformationen zu übermitteln. Es ist auch denkbar, die Höhe des Tastgrads TG innerhalb des zweiten Tastgradbereichs TGB2 anzupassen, um noch mehr Informationen kodieren zu können. Aufeinanderfolgende Nachtrichtimpulse 6 können gleichartig oder bezüglich zumindest einer der im Vorigen beschriebenen Größen abweichend zueinander ausgestaltet sein, um die Menge kodierbarer Informationen weiter zu erhöhen. So lassen sich noch mehr Kodierungsmuster erschließen und nutzen. Abschließend schaltet der Oszillator 5 den Tastgrad TG wieder auf 100% und belässt ihn dort.

In Fig. 3 sind beispielhaft fünf Nachrichtimpulse 6 dargestellt. Dies kann beispielsweise bedeuten, dass ein Fehler des Typs 5 vorliegt. Wie dargestellt können insbesondere die Pulsdauer t1 und die Pausendauer t2 gleichgroß sein.

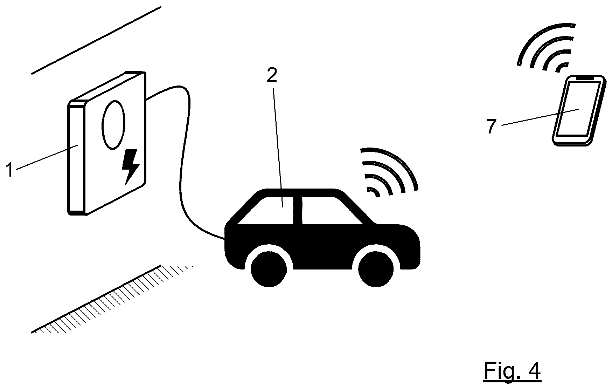

In der Messeinrichtung im Elektrofahrzeug 2, bzw. einem entsprechenden Steuergerät, ist eine Dekodierung der Zusatzinformationen gespeichert. Unter Analyse des PMW-Signals PMW kann somit das Elektrofahrzeug 2 ermitteln, welcher Nachrichttyp als Zusatzinformation übermittelt wurde. Fig. 4 zeigt dabei ein Ausführungsbeispiel, bei der ein erfindungsgemäßes Elektrofahrzeug 2 bei einer als Wallbox ausgeführten Ladevorrichtung 1 einen Ladevorgang durchführt. Dabei wird eine entsprechende Fehlermeldung als Zusatzinformation an das Elektrofahrzeug 2 übermittelt. Diese Information wird direkt über ein mit dem Elektrofahrzeug 2 gekoppeltes mobiles Endgerät 7 an einen Nutzer ausgegeben oder aber das Elektrofahrzeug 2 und das mobile Endgerät 7 sind über ein Backend, das beispielsweise von einem Fahrzeughersteller betrieben wird, miteinander verbunden, um die Information auszutauschen. Dies erlaubt es dem Nutzer transparent mitzuteilen, wie der Status des Ladevorgangs aktuell ist, auch wenn sich der Nutzer nicht in örtlicher Nähe zur Ladevorrichtung 1 aufhält.

## Patentansprüche

1. Ladevorrichtung (1) zum Laden einer Traktionsbatterie eines Elektrofahrzeugs (2), umfassend eine Ladeschnittstelle (3) mit einem Pilotkontakt (4) und einen Oszillator (5), wobei mittels des Oszillators (5) ein als PMW-Signal (PMW) bezeichnetes pulsweitenmoduliertes Spannungssignal auf den Pilotkontakt (4) anlegbar ist, um mit dem Elektrofahrzeug (2) kodierte Informationen über die Ladeschnittstelle (3) auszutauschen, wobei mittels des PMW-Signals (PMW) eine Ladebereitschaft signalisierbar ist, wenn sich der Tastgrad (TG) des PMW-Signals (PMW) einem ersten festgelegten Tastgradbereich (TGB1) zuordnen lässt und ein Ladeverbot signalisierbar ist, wenn sich der Tastgrad (TG) des PMW-Signals (PMW) einem zweiten festgelegten Tastgradbereich (TGB2) zuordnen lässt,
**dadurch gekennzeichnet, dass**
der Oszillator (5) dazu eingerichtet ist, zum Übertragen einer Zusatzinformation über den Pilotkontakt (4):
- zur Ausbildung von Nachrichtimpulsen (6) den Tastgrad (TG) zwischen 100% und einem nachrichttypspezifischen Wert im zweiten Tastgradbereich (TGB2) zu wechseln, wobei eine nachrichttypspezifische Anzahl an Nachrichtimpulsen (6) unter Verwendung einer nachrichttypspezifischen Impulsdauer (t1) und einer nachrichttypspezifischen Pausendauer (t2) gewählt wird; und
- den Tastgrad (TG) zum Signalisieren des Nachrichtendes zurück auf 100% zu schalten und dort zu belassen.

2. Ladevorrichtung (1) nach Anspruch 1,
**dadurch gekennzeichnet, dass**
der Oszillator (5) dazu eingerichtet ist, vor dem Senden von Nachrichtimpulsen (6) einen Tastgrad (TG) von 100% für eine erste festgelegte Zeitdauer (t_send) auf einen festgelegten Wert im zweiten Tastgradbereich (TGB2) zu schalten, insbesondere auf den nachrichttypspezifischen Wert, um einen Nachrichtbeginn zu signalisieren.

3. Ladevorrichtung (1) nach Anspruch 1 oder 2,
**dadurch gekennzeichnet, dass**
der Oszillator (5) dazu eingerichtet ist, die Zusatzinformation durch Wahl einer abweichenden Höhe des Werts des Tastgrads (TG) im zweiten Tastgradbereich (TGB2), eine abweichende Anzahl an Nachrichtimpulsen (6), eine abweichende Impulsdauer (t1) und/oder eine abweichende Pausendauer (t2) zu kodieren.

4. Ladevorrichtung (1) nach einem der Ansprüche 1 bis 3,
**dadurch gekennzeichnet, dass**
als Zusatzinformation eine Fehlermeldung übertragbar ist.

5. Ladevorrichtung (1) nach Anspruch 4,
**dadurch gekennzeichnet, dass**
die Fehlermeldung einen internen Fehler oder einen externen Fehler einer übergeordneten Energieinfrastruktur beschreibt.

6. Ladevorrichtung (1) nach einem der Ansprüche 1 bis 5,
**dadurch gekennzeichnet, dass**
der erste Tastgradbereich (TGB1) einem abgeschlossenen Intervall von 8% bis 97% entspricht.

7. Ladevorrichtung (1) nach einem der Ansprüche 1 bis 6,
**dadurch gekennzeichnet, dass**
der zweite Tastgradbereich (TGB2) ein erstes rechtsoffenes Intervall von 0% bis 8% und ein zweites offenes Intervall von 97% bis 100% umfasst.

8. Ladevorrichtung (1) nach einem der Ansprüche 1 bis 7,
**gekennzeichnet durch**
eine Ausführung als Wallbox.

9. Ladevorrichtung (1) nach einem der Ansprüche 1 bis 8,
**gekennzeichnet durch**
Mittel zum Freigeben und Sperren der Übertragung der Zusatzinformationen.

10. Elektrofahrzeug (2), umfassend eine Ladeschnittstelle (3) zur Verbindung mit einer Ladevorrichtung (1) nach einem der Ansprüche 1 bis 9 und einer Messeinrichtung zum Messen des am Pilotkontakt (4) anlegbaren PMW-Signals (PMW),
**dadurch gekennzeichnet, dass**
in der Messeinrichtung eine Dekodierung der Zusatzinformation gespeichert ist.

11. Elektrofahrzeug (2) nach Anspruch 10,
**gekennzeichnet durch**
Mittel zur Ausgabe einer dekodierten Zusatzinformation an einen Nutzer, insbesondere in Form von Lautsprechern und/oder einer Anzeigevorrichtung.

12. Elektrofahrzeug (2) nach Anspruch 10 oder 11,
**gekennzeichnet durch**
Mittel zum Übertragen einer dekodierten Zusatzinformation an ein mittelbar oder unmittelbar mit dem Elektrofahrzeug (2) gekoppeltes mobiles Endgerät (7).
